# FASCICULE DE BREVET EUROPEEN

(11) **EP 3 917 762 B1**
(45) Date de publication et mention de la délivrance du brevet: **07.09.2022**
(21) Numéro de dépôt: 20708540.8
(22) Date de dépôt: 17.01.2020
(51) Int. Cl.: B29C 70/24, B29B 11/16, B29C 70/32, D03D 25/00, F01D 25/24, D03D 41/00, F01D 25/00, F01D 21/04

(54) **CARTER EN MATÉRIAU COMPOSITE AVEC VARIATION LOCALE D'ÉPAISSEUR**
GEHÄUSE AUS VERBUNDWERKSTOFF MIT LOKALER DICKENVARIATION
HOUSING MADE OF COMPOSITE MATERIAL WITH LOCAL VARIATION OF THICKNESS

(30) Priorité: 30.01.2019 FR 1900875
(43) Date de publication de la demande: 08.12.2021
(73) Titulaire: SAFRAN AIRCRAFT ENGINES, 75015 Paris (FR)
(72) Inventeur: BOUROLLEAU, Clément, 77550 Moissy-Cramayel (FR); BRANCO, Alexandre, 77550 Moissy-Cramayel (FR); DOMINGUES, Serge, 77550 Moissy-Cramayel (FR); FIORE, Vincent, Pascal, 77550 Moissy-Cramayel (FR); SIRAJ, Anwer, 77550 Moissy-Cramayel (FR)
(74) Mandataire: Cabinet Beau de Loménie
(86) Numéro de dépôt international: PCT/FR2020/050068
(87) Numéro de publication internationale: WO 2020/157409

(56) Documents cités:
- WO-A1-2018/041992
- FR-A1- 3 045 456
- FR-A1- 3 046 613

## Description

### Domaine Technique

L'invention concerne les carters de turbine à gaz, et plus particulièrement, mais non exclusivement, les carters de soufflante de turbine à gaz pour moteurs aéronautiques.

### Technique antérieure

La fabrication d'un carter en matériau composite débute par la réalisation d'une texture fibreuse sous forme de bande, la texture fibreuse étant réalisée par tissage tridimensionnel entre une pluralité de couches de fils de chaîne et une pluralité de couches de fils de trame. La texture fibreuse ainsi obtenue est enroulée sur plusieurs tours sur un moule ou outillage présentant la forme du carter à réaliser et maintenue entre le moule et des segments formant contre-moule de manière à obtenir une préforme fibreuse.

Une fois la préforme fibreuse réalisée, c'est-à-dire à la fin de l'enroulement de la texture fibreuse, l'outillage portant la préforme fibreuse est fermé par des contres-moules puis transporté jusqu'à une étuve ou four dans lequel la densification de la préforme par une matrice est réalisée, la matrice pouvant être notamment obtenue par injection et polymérisation d'une résine dans la préforme fibreuse. La fabrication d'un carter de soufflante en matériau composite à matrice organique est notamment décrite dans le document US 8 322 971.

Dans un moteur aéronautique à turbine à gaz, le carter de soufflante remplit plusieurs fonctions, une fonction principale qui est d'assurer la rétention retenant les débris ingérés à l'intérieur du moteur, ou les aubes ou fragments d'aubes projetés par centrifugation, afin d'éviter qu'ils ne traversent le carter et n'atteignent d'autres parties de l'aéronef. Le carter de soufflante doit également remplir des fonctions secondaires comme notamment :
- assurer la continuité mécanique (efforts et moments) entre la manche d'entrée d'air et la virole de carter intermédiaire,
- permettre la fixation de panneaux de veine (panneaux acoustiques amont et aval et cartouche d'abradable),
- assurer la liaison de pièces du moteur entre elles,
- etc.

Les zones les plus épaisses du carter correspondent à la zone de rétention qui doit être plus épaisse afin d'assurer la retenue d'un projectile et aux brides amont et aval qui sont généralement épaisses afin d'assurer les interfaces avec les autres parties du moteur et avec de nombreuses reprises d'efforts. Les autres zones du carter peuvent être amincies pour un allègement de la masse globale du carter.

Toutefois, comme décrit dans le document US 8 322 971, le carter en matériau composite présente une forme axisymétrique si bien que les variations d'épaisseurs réalisées dans le carter sont présentes sur toutes la circonférence du carter. Un usinage peut être utilisé pour former des variations d'épaisseur locales dans le carter. Toutefois, cette solution n'est pas souhaitable car, lors de l'usinage, on sectionne des fils, ce qui dégrade les propriétés mécaniques du matériau composite du carter.

Le document FR 3046613 A1 décrit un procédé de fabrication d'un carter en matériau composite pour turbine à gaz selon le préambule de la revendication 1 et un carter de soufflante de turbine à gaz en matériau composite selon le préambule de la revendication 6.

Or, il existe un besoin pour pouvoir faire varier l'épaisseur d'un carter de manière locale et non axisymétrique.

### Exposé de l'invention

L'invention a pour but de proposer un carter de turbine à gaz en matériau composite dont l'épaisseur et/ou la géométrie varient localement sans avoir recours à un usinage du matériau composite.

Ce but est atteint notamment grâce à un procédé de fabrication d'un carter en matériau composite pour une turbine à gaz conformément à la revendication 1.

Il est ainsi possible de faire varier localement l'épaisseur du carter dans le sens radial, et ce sans avoir à usiner le matériau composite du carter.

Selon un mode de réalisation particulier du procédé de l'invention, la texture fibreuse comporte au moins une portion latérale d'épaisseur variable dans laquelle les fils de trame ont une taille ou un titre supérieur à la taille ou au titre des fils de trame de la pluralité de couches de fils de trame présents dans le reste de la texture fibreuse. On forme ainsi dans le carter une portion de surépaisseur permettant notamment de constituer localement sur le carter une zone de support de fixation pour des équipements et/ou une zone de renforcement mécanique. Dans ce cas, les fils de trame présents dans ladite au moins une portion latérale d'épaisseur variable peuvent avoir un titre ou une taille égale à 36K tandis que les fils de trame de la pluralité de couches de fils de trame présents dans le reste de la texture fibreuse ont un titre ou une taille de 24K.

Selon un autre mode de réalisation particulier du procédé de l'invention, la texture fibreuse comporte au moins une portion latérale d'épaisseur variable dans laquelle les fils de trame ont une taille ou un titre inférieur à la taille ou au titre des fils de trame de la pluralité de couches de fils de trame présents dans le reste de la texture fibreuse. On forme ainsi dans le carter une portion de sous-épaisseur permettant notamment de créer localement sur le carter une zone de dégagement où l'encombrement du carter est réduite et où il est possible d'éviter des interférences de montage avec des canalisations, harnais ou tout autre type d'équipements. Dans ce cas, les fils de trame présents dans ladite au moins une portion latérale d'épaisseur variable peuvent avoir un titre ou une taille égale à 12K tandis que les fils de trame de la pluralité de couches de fils de trame présents dans le reste de la texture fibreuse ont un titre ou une taille de 24K. L'invention propose également un carter de soufflante de turbine à gaz en matériau composite conformément à la revendication 6.

Selon un mode de réalisation particulier du carter de l'invention, la texture fibreuse comporte au moins une portion latérale d'épaisseur variable dans laquelle les fils de trame ont une taille ou un titre supérieur à la taille ou au titre des fils de trame de la pluralité de couches de fils de trame présents dans le reste de la texture fibreuse. On forme ainsi dans le carter une portion de surépaisseur permettant notamment de constituer localement sur le carter une zone de support de fixation pour des équipements et/ou une zone de renforcement mécanique. Dans ce cas, les fils de trame présents dans ladite au moins une portion latérale d'épaisseur variable peuvent avoir un titre ou une taille égale à 36K tandis que les fils de trame de la pluralité de couches de fils de trame présents dans le reste de la texture fibreuse ont un titre ou une taille de 24K.

Selon un autre mode de réalisation particulier du carter selon l'invention, la texture fibreuse comporte au moins une portion latérale d'épaisseur variable dans laquelle les fils de trame ont une taille ou un titre inférieur à la taille ou au titre des fils de trame de la pluralité de couches de fils de trame présents dans le reste de la texture fibreuse. On forme ainsi dans le carter une portion de sous-épaisseur permettant notamment de créer localement sur le carter une zone de dégagement où l'encombrement du carter est réduite et où il est possible d'éviter des interférences de montage avec des canalisations, harnais ou tout autre type d'équipements. Dans ce cas, les fils de trame présents dans ladite au moins une portion latérale d'épaisseur variable peuvent avoir un titre ou une taille égale à 12K tandis que les fils de trame de la pluralité de couches de fils de trame présents dans le reste de la texture fibreuse ont un titre ou une taille de 24K. L'invention a encore pour objet un moteur aéronautique à turbine à gaz ayant un carter de soufflante selon l'invention.

### Brève description des dessins

[Fig. 1] La figure 1 est une vue schématique en perspective d'un métier à tisser montrant le tissage tridimensionnel d'une texture fibreuse,
[Fig. 2] La figure 2 est une vue schématique en perspective d'une texture fibreuse conformément à un mode de réalisation de l'invention,
[Fig. 3] La figure 3 est une coupe longitudinale prise au niveau d'une portion de surépaisseur et d'une portion de sous épaisseur de la texture fibreuse de la figure 2 et montrant un plan d'armure de tissage,
[Fig. 4] La figure 4 est une vue schématique en perspective montrant l'enroulement d'une texture fibreuse sur un outillage de mise en forme,
[Fig. 5] La figure 5 est une demi-vue en coupe axiale d'une préforme de carter obtenue par enroulement d'une texture fibreuse comme montré sur la figure 4,
[Fig. 6] La figure 6 est une vue en coupe montrant le positionnement de secteurs d'injection sur la préforme du carter de la figure 5,
[Fig. 7] La figure 7 est une vue en perspective d'un moteur aéronautique conformément à un mode de réalisation de l'invention.

### Description des modes de réalisation

L'invention s'applique d'une manière générale à tout carter en matériau composite à matrice organique de turbine à gaz.

L'invention sera décrite ci-après dans le cadre de son application à un carter de soufflante de moteur aéronautique à turbine à gaz.

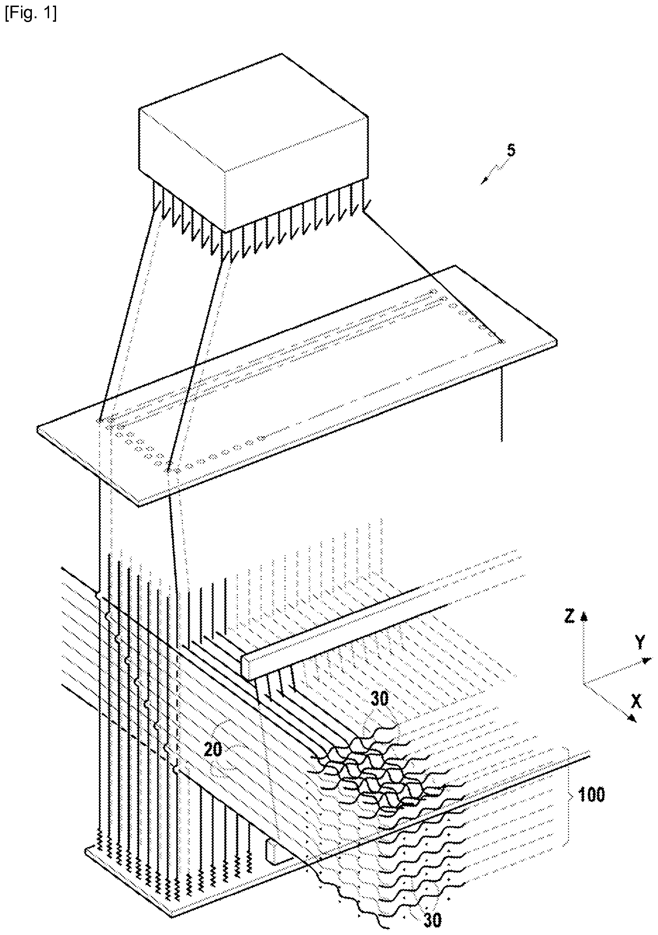

Le procédé de fabrication d'un carter en matériau composite selon un mode de réalisation de l'invention débute, comme représentée sur la figure 1, par la réalisation d'une texture fibreuse 100 par tissage au moyen d'un métier à tisser de type jacquard 5 sur lequel on a disposé un faisceau de fils de chaîne ou torons 20 en une pluralité de couches, les fils de chaîne étant liés par des fils ou torons de trame 30.

La texture fibreuse est réalisée par tissage tridimensionnel. Par « tissage tridimensionnel » ou « tissage 3D », on entend ici un mode de tissage par lequel certains au moins des fils de trame lient des fils de chaîne sur plusieurs couches de fils de chaîne ou inversement. La texture fibreuse peut présenter une armure de tissage interlock. Par tissage « interlock », on entend ici une armure de tissage dans laquelle chaque couche de fils de trame lie plusieurs couches de fils de chaîne, avec tous les fils d'une même colonne de trame ayant le même mouvement dans le plan de l'armure. D'autres armures de tissage sont envisageables. Les fils utilisés peuvent être notamment des fils en fibres de carbone, de verre ou de carbure de silicium.

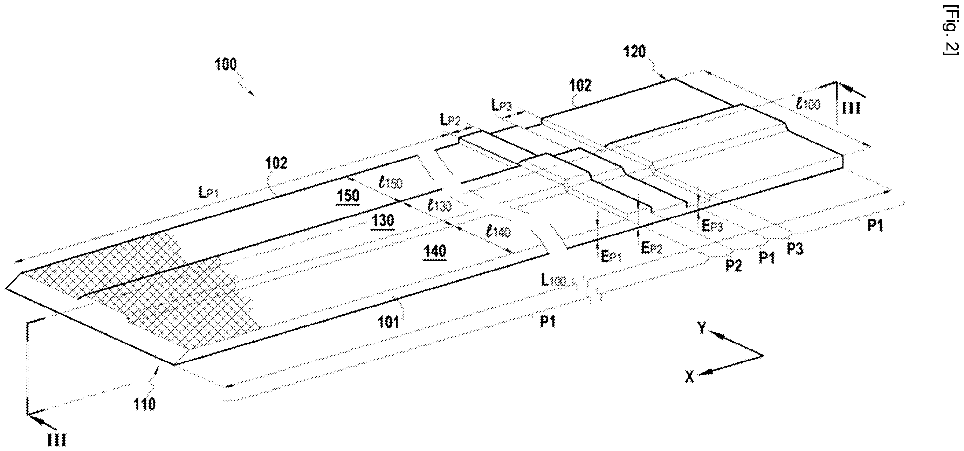

Comme illustrée sur la figure 2, la texture fibreuse 100 présente une forme de bande qui s'étend en longueur dans une direction longitudinale X correspondant à la direction de défilement des fils ou torons de chaîne 20 et en largeur ou transversalement dans une direction latérale Y entre un premier et un deuxième bords latéraux 101 et 102, la direction latérale Y correspondant à la direction des fils ou torons de trame 30. La texture fibreuse s'étend longitudinalement sur une longueur déterminée L₁₀₀ dans la direction X entre une partie proximale 110 destinée à former le début de l'enroulement d'une préforme fibreuse sur un outillage de mise en forme et une partie distale 120 destinée à former la fin de l'enroulement de la préforme fibreuse.

La texture fibreuse présente en outre une zone centrale 130 s'étendant sur une largeur déterminée I₁₃₀ dans la direction Y, la zone centrale 130 étant destinée à former le fût ou la virole du carter. La zone centrale 130 est destinée à être présente en regard des aubes et définit la zone de rétention du carter à obtenir. La zone centrale 130 est située en retrait des premier 101 et deuxième 102 bords latéraux et s'étend sur une largeur déterminée I₁₃₀ inférieure à la largeur I₁₀₀ de la texture 100. La zone centrale 130 est à une position intermédiaire entre les premier et deuxième bords latéraux 101 et 102. La zone centrale 130 est délimitée entre deux zones latérales 140 et 150 s'étendant chacune sur une largeur déterminée, respectivement I₁₄₀ et I₁₅₀, dans la direction Y. La première zone latérale 140 s'étend entre le premier bord latéral 101 et la zone centrale 130. La deuxième zone latérale 150 s'étend entre le deuxième bord latéral 102 et la zone centrale 130. Chacune des zones latérales 140 et 150 est destinée au moins en partie à former une bride annulaire du carter.

La longueur L₁₀₀ de la texture fibreuse 100 est déterminée en fonction de la circonférence de l'outillage ou du moule de mise en forme de manière à permettre la réalisation d'un nombre de tours déterminé de la texture fibreuse, par exemple quatre tours.

Conformément à l'invention, la texture fibreuse comporte une ou plusieurs portions latérales d'épaisseur variable dans laquelle les fils de trame ont une taille ou un titre différent de la taille ou du titre des fils de trame de la pluralité de couches de fils de trame présents dans le reste de la texture fibreuse. La ou les portions latérales d'épaisseur variable s'étendent sur une longueur déterminée suivant la direction longitudinale X et sur toute la largeur de la texture fibreuse suivant la direction latérale Y. Dans l'exemple décrit ici, la texture fibreuse 100 comprend une première portion latérale d'épaisseur variable correspondant à une portion de surépaisseur P2 et une deuxième portion latérale d'épaisseur variable correspondant à une portion de sous-épaisseur P3. Le reste de la texture fibreuse est constitué de portions P1 d'épaisseur latérale constante. La portion de surépaisseur P2 et la portion de sous-épaisseur P3 s'étendent respectivement sur des longueurs L_{P2} et L_{P3} déterminées suivant la direction longitudinale X en fonction de taille des parties axiales de variations d'épaisseur que l'on souhaite former sur la carter final.

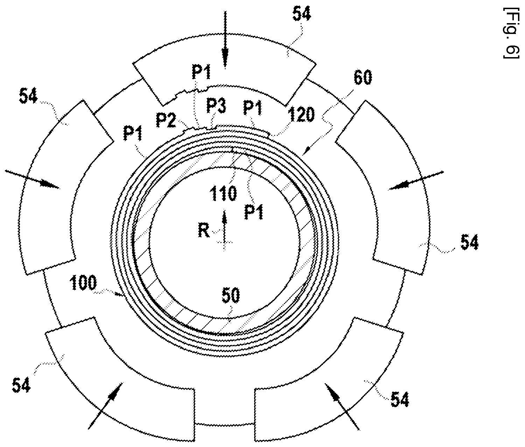

Dans l'exemple décrit ici, la texture fibreuse 100 s'étend sur une longueur L₁₀₀ permettant de faire quatre tours d'enroulement sur l'outillage ou du moule de mise en forme. Toujours dans l'exemple décrit ici, la première des portions P1 s'étend sur une longueur L_{P1} définie de manière à correspondre aux trois premiers tours d'enroulement sur l'outillage ou moule de mise en forme (figure 6) tandis que les portions de surépaisseur P2 et de sous-épaisseur P3 sont présentes sur la texture fibreuse à des positions correspondant au dernier tour d'enroulement sur l'outillage ou moule de mise en forme (figure 6).

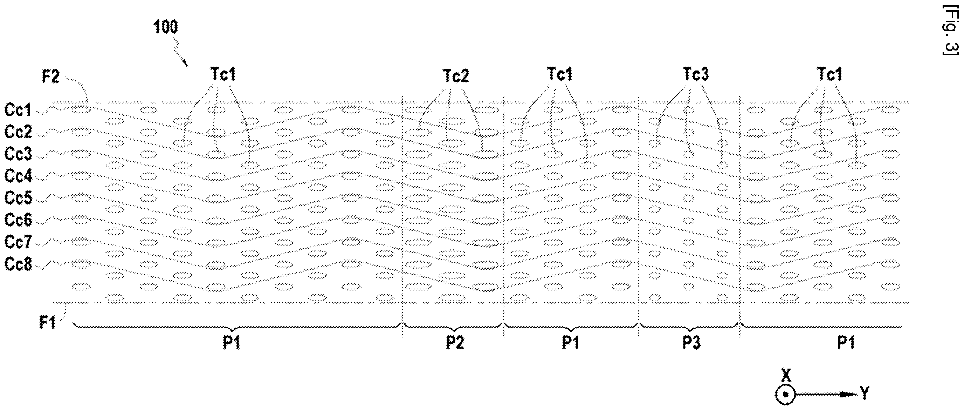

La figure 3 illustre un plan de l'armure de tissage interlock de la texture fibreuse 100 situé au niveau des portions de surépaisseur P2 et de sous-épaisseur P3.

L'exemple de plan d'armure illustré à la figure 3 comprend 9 couches de trame Tc et 8 couches de chaîne Cc1 à Cc8. Dans l'armure interlock illustrée, une couche de trame est formée de deux demi-couches de trame adjacentes décalées l'une par rapport à l'autre dans le sens trame. On a donc 18 demi-couches de trame positionnées en quinconce. Chaque couche de chaîne lie 3 demi-couches de trame. On pourrait aussi adopter une disposition non en quinconce, les fils de chaine de deux couches de chaine voisines étant alignés sur des mêmes colonnes. Des armures de tissage de type interlock utilisables sont décrites dans le document WO 2006/136755.

Dans l'exemple illustré, la texture fibreuse comprend des fils ou torons de chaine en fibres de carbone, notés Cc1 à Cc8. La texture fibreuse comprend également des fils ou torons de trame en fibres de carbone, notés Tc1, Tc2 et Tc3 ayant une taille ou un titre différent. Le titre ou titrage d'un fil correspond à la grosseur de celui-ci (selon le type de matière du fil, la densité varie, donc le volume occupé pour une même masse sera différent) et peut être défini de plusieurs façons. Il peut être notamment défini par la masse linéique du fil (masse par unité de longueur) qui s'exprime généralement en tex correspondant à la masse en grammes de 1000 mètres de fil ou en décitex (dtx) correspondant à la masse (en grammes) de 10000 mètres de fil. Le titre d'un fil peut être également défini par le nombre de filaments qui le compose. Dans ce cas, le titre du fil s'exprime en « K » qui correspond au nombre en millier de filaments par fil. Par exemple, un fil de 1K comprend 1000 filaments.

Comme illustré à la figure 3, les premières portions P1 comportent des fils de trame Tc1 ayant une première taille ou premier titre, par exemple un titre de 24K (24000 filaments), définissant une première épaisseur latérale E_{P1} (figure 2) correspondant à l'épaisseur normale de la texture fibreuse 100. La portion de surépaisseur P2 comporte des fils de trames Tc2 ayant une deuxième taille ou deuxième titre supérieur à la taille ou au titre des fils de trame Tc1, par exemple un titre de 36K (36000 filaments), définissant dans la texture une deuxième épaisseur latérale E_{P2} (figure 2) correspondant à l'épaisseur de la portion de surépaisseur P2. La portion de sous-épaisseur P3 comporte des fils de trames Tc3 ayant une troisième taille ou troisième titre inférieur à la taille ou au titre des fils de trame Tc1, par exemple un titre de 12K (12000 filaments), définissant dans la texture une troisième épaisseur latérale E_{P3} (figure 2) correspondant à l'épaisseur de la portion de sous-épaisseur P3.

On vient de décrire un exemple dans lequel la texture fibreuse a une armure de tissage interlock à 9 couches de trame et 8 couches de chaine. On ne sort toutefois pas du cadre de l'invention lorsque le nombre de couches de trame et de chaine est différent, ou lorsque la texture fibreuse présente une armure de tissage différente d'une armure interlock.

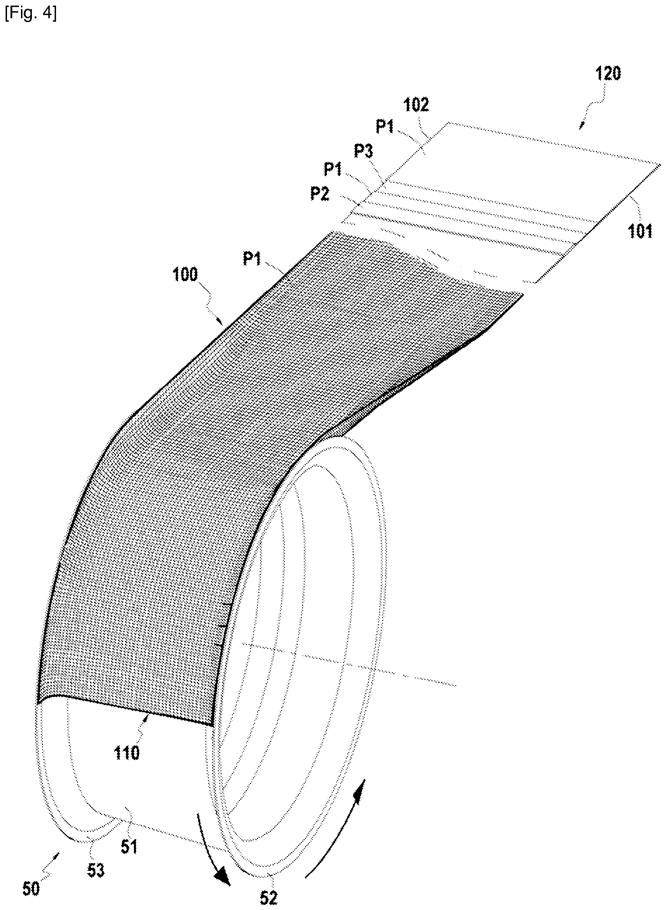

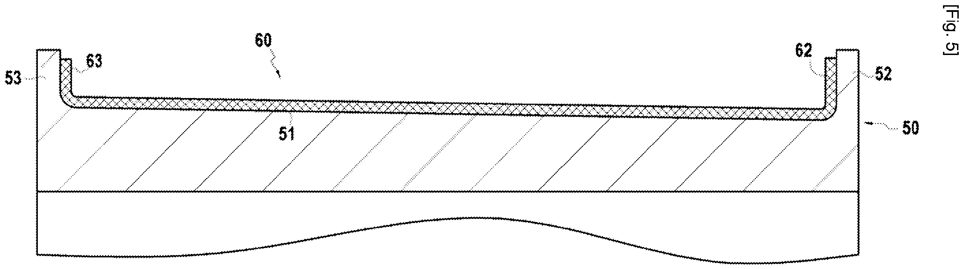

Comme illustré sur la figure 4, un renfort fibreux de carter est formé par enroulement sur un mandrin 50 de la texture fibreuse 100 décrite précédemment, le renfort fibreux constituant une préforme fibreuse tubulaire complète d'un carter formant une seule pièce. A cet effet, le mandrin 50 présente une surface externe 51 dont le profil correspond à la surface interne du carter à réaliser. Le mandrin 50 comporte également deux flasques 52 et 53 pour former des parties de préforme fibreuse 62 et 63 correspondant aux brides du carter (les brides 62 et 63 sont visibles à la figure 5). Les portions de surépaisseur P2 et de sous-épaisseur P3 sont présentes à des positions sur la texture fibreuse 100 correspondant au dernier tour situé radialement vers l'extérieur de la préforme.

La figure 5 montre une vue en coupe de la préforme fibreuse 60 obtenue après enroulement de la texture fibreuse 100 en plusieurs couches sur le mandrin 50. Le nombre de couches ou spires est fonction de l'épaisseur désirée et de l'épaisseur de la texture fibreuse. Il est de préférence au moins égal à 2. Dans l'exemple décrit ici, la préforme 60 comprend 4 couches de texture fibreuse 100.

On procède ensuite à la densification de la préforme fibreuse 60 par une matrice.

La densification de la préforme fibreuse consiste à combler la porosité de la préforme, dans tout ou partie du volume de celle-ci, par le matériau constitutif de la matrice.

La matrice peut être obtenue de façon connue en soi suivant le procédé par voie liquide. Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 6, la préforme fibreuse 60 est ici placée entre une pluralité de secteurs 54 formant contre-moule et le mandrin 50 formant support, ces éléments présentant respectivement la forme extérieure et la forme intérieure du carter à réaliser. Ensuite, on injecte le précurseur liquide de matrice, par exemple une résine, dans tout le logement pour imprégner la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse peut être réalisée par le procédé bien connu de moulage par transfert dit RTM (« Resin Transfert Moulding »). Conformément au procédé RTM, on place la préforme fibreuse dans un moule présentant la forme du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

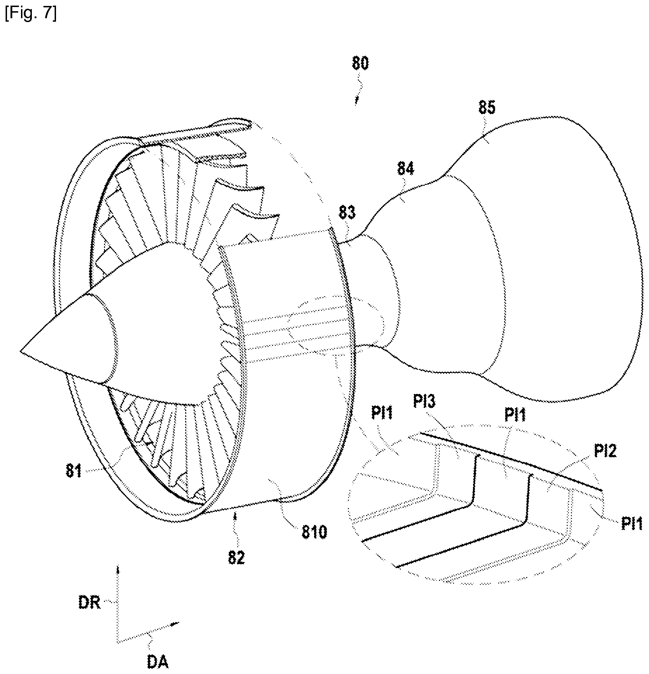

Après l'injection et la polymérisation, la pièce est démoulée. La pièce est finalement détourée pour enlever l'excès de résine et les chanfreins sont usinés pour obtenir un carter 810 présentant une forme de révolution comme illustré sur la figure 7.

Le carter 810 représenté sur la figure 7 est un carter d'une soufflante de moteur aéronautique à turbine à gaz 80. Un tel moteur, comme montré très schématiquement par la figure 7 comprend, de l'amont vers l'aval dans le sens de l'écoulement de flux gazeux, une soufflante 81 disposée en entrée du moteur, un compresseur 82, une chambre de combustion 83, une turbine haute-pression 84 et une turbine basse pression 85. Le moteur est logé à l'intérieur d'un carter comprenant plusieurs parties correspondant à différents éléments du moteur. Ainsi, la soufflante 81 est entourée par le carter 810.

En outre, le carter 810 présente une portion de surépaisseur P_{I2} correspondant à la portion de surépaisseur P2 réalisée dans la texture fibreuse, la portion de surépaisseur P_{I2} s'étendant sur toute la largeur du carter suivant une direction axiale D_{A} du carter 810 et en épaisseur suivant une direction radiale D_{R} du carter 810. Le carter 810 présente également une portion de sous-épaisseur P_{I3} correspondant à la portion de sous-épaisseur P3 réalisée dans la texture fibreuse, la portion de sous-épaisseur P_{I3} s'étendant sur toute la largeur du carter suivant une direction axiale D_{A} du carter 810 et en épaisseur suivant une direction radiale D_{R} du carter 810.

La portion de surépaisseur P_{I2} permet par exemple de constituer localement sur le carter une zone de support de fixation pour des équipements et/ou une zone de renforcement mécanique. La portion de sous-épaisseur P₁₃ permet par exemple de créer une zone de dégagement où l'encombrement du carter est réduit et où il est possible d'éviter des interférences de montage avec des canalisations, harnais ou tout autre type d'équipements.

Dans l'exemple décrit ici la texture fibreuse utilisée pour former le renfort fibreux du carter en matériau composite comprend deux portions latérales à épaisseur variable présente à des positions correspondant au dernier tour d'enroulement de la préforme fibreuse. Toutefois, la texture fibreuse peut comprendre un nombre différent de portions latérales à épaisseur variable correspondant indifféremment à des portions de surépaisseur ou de sous-épaisseur, et ce ceux à différentes positions sur la structure fibreuse. La structure fibreuse peut, par exemple, comporter plusieurs portions de surépaisseur ou de sous-épaisseur réparties sur la texture fibreuse à des positions se chevauchant lors de l'enroulement de la texture pour former la préforme fibreuse de carter de manière à accentuer la surépaisseur ou la sous-épaisseur résultante dans le carter final.

## Revendications

1. Procédé de fabrication d'un carter (810) en matériau composite pour une turbine à gaz, comprenant:
- la réalisation d'une texture fibreuse (100) par tissage tridimensionnel entre une pluralité de couches de fils ou torons de chaîne (20) s'étendant dans une direction longitudinale (X) et une pluralité de couches de fils ou torons de trame (30) s'étendant dans la direction latérale (Y), la texture fibreuse présentant une forme de bande s'étendant dans la direction longitudinale (X) sur une longueur déterminée (L₁₀₀) entre une partie proximale (110) et une partie distale (120) et dans la direction latérale (Y) sur une largeur déterminée (I₁₀₀) entre un premier bord latéral (101) et un deuxième bord latéral (102),
- l'enroulement de la texture fibreuse (100) sur plusieurs tours superposés sur un mandrin (50) de profil correspondant à celui du carter à fabriquer afin d'obtenir une préforme fibreuse (60) de forme correspondant à celle du carter à fabriquer,
la densification de la préforme fibreuse (60) par une matrice de manière à obtenir un carter en matériau composite présentant une forme de révolution, la texture fibreuse (100) comportant au moins une portion latérale d'épaisseur variable (P2 ; P3), **caractérisé en ce que** dans ladite au moins une portion d'épaisseur variable les fils de trame (Tc2 ; Tc3) ont une taille ou un titre différent de la taille ou du titre des fils de trame (Tc1) de la pluralité de couches de fils de trame présents dans le reste de la texture fibreuse, ladite au moins une portion latérale d'épaisseur variable s'étendant sur une longueur déterminée suivant la direction longitudinale (X) et sur toute la largeur déterminée (I₁₀₀) de la texture fibreuse suivant la direction latérale (Y) de manière à former dans le carter (810) au moins une partie (P_{I2} ; P_{I3}) ayant une épaisseur différente du reste du carter suivant une direction radiale.

2. Procédé selon la revendication 1, dans lequel la texture fibreuse (100) comporte au moins une portion latérale d'épaisseur variable (P2) dans laquelle les fils de trame (Tc2) ont une taille ou un titre supérieur à la taille ou au titre des fils de trame (Tc1) de la pluralité de couches de fils de trame présents dans le reste de la texture fibreuse.

3. Procédé selon la revendication 2, dans lequel les fils de trame (Tc2) présents dans ladite au moins une portion latérale d'épaisseur variable (P2) ont un titre ou une taille égale à 36K tandis que les fils de trame (Tc1) de la pluralité de couches de fils de trame présents dans le reste de la texture fibreuse ont un titre ou une taille de 24K.

4. Procédé selon l'une quelconque des revendications 1 à 3, dans lequel la texture fibreuse (100) comporte au moins une portion latérale d'épaisseur variable (P3) dans laquelle les fils de trame (Tc3) ont une taille ou un titre inférieur à la taille ou au titre des fils de trame (Tc1) de la pluralité de couches de fils de trame présents dans le reste de la texture fibreuse.

5. Procédé selon la revendication 4, dans lequel les fils de trame (Tc3) présents dans ladite au moins une portion latérale d'épaisseur variable (P3) ont un titre ou une taille égale à 12K tandis que les fils de trame (Tc1) de la pluralité de couches de fils de trame présents dans le reste de la texture fibreuse ont un titre ou une taille de 24K.

6. Carter de soufflante (810) de turbine à gaz en matériau composite avec un renfort fibreux comprenant une pluralité de tours superposés d'une texture fibreuse (100) sous forme d'une bande présentant un tissage tridimensionnel entre une pluralité de couches de fils de chaîne (20) et une pluralité de couches de fils de trame (30), ledit renfort fibreux étant densifié par une matrice, la texture fibreuse (100) comportant au moins une portion latérale d'épaisseur variable (P2 ; P3), **caractérisé en ce que** dans ladite au moins une portion latérale d'épaisseur variable les fils de trame (Tc2 ; Tc3) ont une taille ou un titre différent de la taille ou du titre des fils de trame (Tc1) de la pluralité de couches de fils de trame présents dans le reste de la texture fibreuse, ladite au moins une portion latérale d'épaisseur variable s'étendant sur toute la largeur (I₁₀₀) de la texture fibreuse suivant une direction axiale (DA) du carter.

7. Carter selon la revendication 6, dans lequel la texture fibreuse (100) comporte au moins une portion latérale d'épaisseur variable (P2) dans laquelle les fils de trame (Tc2) ont une taille ou un titre supérieur à la taille ou au titre des fils de trame (Tc1) de la pluralité de couches de fils de trame présents dans le reste de la texture fibreuse.

8. Carter selon la revendication 7, dans lequel les fils de trame (Tc2) présents dans ladite au moins une portion latérale d'épaisseur variable (P2) ont un titre ou une taille égale à 36K tandis que les fils de trame (Tc1) de la pluralité de couches de fils de trame présents dans le reste de la texture fibreuse ont un titre ou une taille de 24K.

9. Carter selon l'une quelconque des revendications 6 à 8, dans lequel la texture fibreuse (100) comporte au moins une portion latérale d'épaisseur variable (P3) dans laquelle les fils de trame (Tc3) ont une taille ou un titre inférieur à la taille ou au titre des fils de trame (Tc1) de la pluralité de couches de fils de trame présents dans le reste de la texture fibreuse.

10. Carter selon la revendication 9, dans lequel les fils de trame (Tc3) présents dans ladite au moins une portion latérale d'épaisseur variable (P3) ont un titre ou une taille égale à 12K tandis que les fils de trame (Tc1) de la pluralité de couches de fils de trame présents dans le reste de la texture fibreuse ont un titre ou une taille de 24K.

11. Moteur aéronautique à turbine à gaz ayant un carter de soufflante (100) selon l'une quelconque des revendications 6 à 10.

## Patentansprüche

1. Verfahren zur Herstellung eines Gehäuses (810) aus Verbundmaterial für eine Gasturbine, das umfasst:
- Ausführen einer faserigen Textur (100) durch dreidimensionales Weben zwischen einer Vielzahl von Schichten aus Kettfäden oder -kardeelen (20), die sich in einer Längsrichtung (X) erstrecken, und einer Vielzahl von Schichten aus Schussfäden oder - kardeelen (30), die sich in der seitlichen Richtung (Y) erstrecken, wobei die faserige Textur eine Form eines Bandes aufweist, das sich in der Längsrichtung (X) über eine bestimmte Länge (L₁₀₀) zwischen einem proximalen Teil (110) und einem distalen Teil (120) und in der seitlichen Richtung (Y) über eine bestimmte Breite (I₁₀₀) zwischen einem ersten seitlichen Rand (101) und einem zweiten seitlichen Rand (102) erstreckt,
- Aufwickeln der faserigen Textur (100) über mehrere übereinander liegende Windungen auf einer Wickelhülse (50) mit einem Profil, das demjenigen des herzustellenden Gehäuses entspricht, um eine faserige Vorform (60) mit einer Form zu erhalten, die derjenigen des herzustellenden Gehäuses entspricht,
- Verdichten der faserigen Vorform (60) durch eine Matrix, derart dass ein Gehäuse aus Verbundmaterial erhalten wird, das eine Umlaufform aufweist, wobei die faserige Textur (100) mindestens einen seitlichen Abschnitt mit veränderlicher Dicke (P2; P3) umfasst, **dadurch gekennzeichnet, dass** in dem mindestens einen Abschnitt mit veränderlicher Dicke die Schussfäden (Tc2; Tc3) eine Größe oder einen Titer aufweisen, die bzw. der sich von der Größe oder dem Titer der Schussfäden (Tc1) der Vielzahl von Schichten aus Schussfäden unterscheidet, die in dem Rest der faserigen Textur vorhanden sind, wobei der mindestens eine seitliche Abschnitt mit veränderlicher Dicke sich über eine bestimmte Länge entlang der Längsrichtung (X) und über die gesamte bestimmte Breite (I₁₀₀) der faserigen Textur entlang der seitlichen Richtung (Y) erstreckt, derart dass in dem Gehäuse (810) mindestens ein Teil (P_{I2}; P_{I3}) gebildet wird, der entlang einer radialen Richtung eine Dicke aufweist, die sich vom Rest des Gehäuses unterscheidet.

2. Verfahren nach Anspruch 1, wobei die faserige Textur (100) mindestens einen seitlichen Abschnitt (P2) mit veränderlicher Dicke umfasst, in dem die Schussfäden (Tc2) eine Größe oder einen Titer aufweisen, die bzw. der größer als die Größe oder der Titer der Schussfäden (Tc1) der Vielzahl von Schichten aus Schussfäden ist, die im Rest der faserigen Textur vorhanden sind.

3. Verfahren nach Anspruch 2, wobei die Schussfäden (Tc2), die in dem mindestens einen seitlichen Abschnitt (P2) mit veränderlicher Dicke vorhanden sind, einen Titer oder eine Größe von gleich 36K aufweisen, während die Schussfäden (Tc1) der Vielzahl von Schichten aus Schussfäden, die im Rest der faserigen Textur vorhanden sind, einen Titer oder eine Größe von 24K aufweisen.

4. Verfahren nach einem der Ansprüche 1 bis 3, wobei die faserige Textur (100) mindestens einen seitlichen Abschnitt (P3) mit veränderlicher Dicke umfasst, in dem die Schussfäden (Tc3) eine Größe oder einen Titer aufweisen, die bzw. der kleiner als die Größe oder der Titer der Schussfäden (Tc1) der Vielzahl von Schichten aus Schussfäden ist, die im Rest der faserigen Textur vorhanden sind.

5. Verfahren nach Anspruch 4, wobei die Schussfäden (Tc3), die in dem mindestens einen seitlichen Abschnitt (P3) mit veränderlicher Dicke vorhanden sind, einen Titer oder eine Größe von gleich 12K aufweisen, während die Schussfäden (Tc1) der Vielzahl von Schichten aus Schussfäden, die im Rest der faserigen Textur vorhanden sind, einen Titer oder eine Größe von 24K aufweisen.

6. Gasturbinen-Gebläsegehäuse (810) aus Verbundmaterial mit einer faserigen Verstärkung, die eine Vielzahl von übereinander liegenden Windungen einer faserigen Textur (100) mit der Form eines Bandes umfasst, das ein dreidimensionales Gewebe zwischen einer Vielzahl von Schichten aus Kettfäden (20) und einer Vielzahl von Schichten aus Schussfäden (30) aufweist, wobei die faserige Verstärkung durch eine Matrix verdichtet ist, wobei die faserige Textur (100) mindestens einen seitlichen Abschnitt mit veränderlicher Dicke (P2; P3) umfasst, **dadurch gekennzeichnet, dass** in dem mindestens einen seitlichen Abschnitt mit veränderlicher Dicke die Schussfäden (Tc2; Tc3) eine Größe oder einen Titer aufweisen, die bzw. der sich von der Größe oder dem Titer der Schussfäden (Tc1) der Vielzahl von Schichten aus Schussfäden unterscheidet, die im Rest der faserigen Textur vorhanden sind, wobei der mindestens eine seitliche Abschnitt mit veränderlicher Dicke sich über die gesamte Breite (I₁₀₀) der faserigen Textur entlang einer axialen Richtung (DA) des Gehäuses erstreckt.

7. Gehäuse nach Anspruch 6, wobei die faserige Textur (100) mindestens einen seitlichen Abschnitt (P2) mit veränderlicher Dicke umfasst, in dem die Schussfäden (Tc2) eine Größe oder einen Titer aufweisen, die bzw. der größer als die Größe oder der Titer der Schussfäden (Tc1) der Vielzahl von Schichten aus Schussfäden ist, die im Rest der faserigen Textur vorhanden sind.

8. Gehäuse nach Anspruch 7, wobei die Schussfäden (Tc2), die in dem mindestens einen seitlichen Abschnitt (P2) mit veränderlicher Dicke vorhanden sind, einen Titer oder eine Größe von gleich 36K aufweisen, während die Schussfäden (Tc1) der Vielzahl von Schichten aus Schussfäden, die im Rest der faserigen Textur vorhanden sind, einen Titer oder eine Größe von 24K aufweisen.

9. Gehäuse nach einem der Ansprüche 6 bis 8, wobei die faserige Textur (100) mindestens einen seitlichen Abschnitt (P3) mit veränderlicher Dicke umfasst, in dem die Schussfäden (Tc3) eine Größe oder einen Titer aufweisen, die bzw. der kleiner als die Größe oder der Titer der Schussfäden (Tc1) der Vielzahl von Schichten von Schussfäden ist, die im Rest der faserigen Textur vorhanden sind.

10. Gehäuse nach Anspruch 9, wobei die Schussfäden (Tc3), die in dem mindestens einen seitlichen Abschnitt (P3) mit veränderlicher Dicke vorhanden sind, einen Titer oder eine Größe von gleich 12K aufweisen, während die Schussfäden (Tc1) der Vielzahl von Schichten aus Schussfäden, die im Rest der faserigen Textur vorhanden sind, einen Titer oder eine Größe von 24K aufweisen.

11. Gasturbinen-Flugzeugtriebwerk, das ein Gebläsegehäuse (100) nach einem der vorhergehenden Ansprüche 6 bis 10 aufweist.

## Claims

1. A method for manufacturing a casing (810) made of composite material for a gas turbine, comprising:
- the production of a fibrous texture (100) by three-dimensional weaving between a plurality of layers of warp yarns or strands (20) extending in a longitudinal direction (X) and a plurality of layers of weft yarns or strands (30) extending in the lateral direction (Y), the fibrous texture having a strip shape extending in the longitudinal direction (X) over a determined length (L₁₀₀) between a proximal portion (110) and a distal portion (120) and in the lateral direction (Y) over a determined width (I₁₀₀) between a first lateral edge (101) and a second lateral edge (102),
- the winding of the fibrous texture (100) over several superimposed turns on a mandrel (50) of a profile corresponding to that of the casing to be manufactured in order to obtain a fibrous preform (60) of a shape corresponding to that of the casing to be manufactured,
the densification of the fibrous preform (60) by a matrix so as to obtain a casing made of composite material having a shape of revolution,
**characterized in that** the fibrous texture (100) includes at least one lateral section of variable thickness (P2; P3) in which the weft yarns (Tc2; Tc3) have a size or a count different from the size or the count of the weft yarns (Tc1) of the plurality of layers of weft yarns present in the remainder of the fibrous texture, said at least one lateral section of variable thickness extending over a determined length along the longitudinal direction (X) and over the entire determined width (I₁₀₀) of the fibrous texture along the lateral direction (Y) so as to form in the casing (810) at least one portion (P_{I2}; P_{I3}) with a different thickness from the remainder of the casing along a radial direction.

2. The method according to claim 1, wherein the fibrous texture (100) includes at least one lateral section of variable thickness (P2) in which the weft yarns (Tc2) have a size or a count greater than the size or the count of the weft yarns (Tc1) of the plurality of layers of weft yarns present in the remainder of the fibrous texture.

3. The method according to claim 2, wherein the weft yarns (Tc2) present in said at least one lateral section of variable thickness (P2) have a count or a size equal to 36K while the weft yarns (Tc1) of the plurality of layers of weft yarns present in the remainder of the fibrous texture have a count or a size of 24K.

4. The method according to any one of claims 1 to 3, wherein the fibrous texture (100) includes at least one lateral section of variable thickness (P3) in which the weft yarns (Tc3) have a size or a count smaller than the size or the count of the weft yarns (Tc1) of the plurality of layers of weft yarns present in the remainder of the fibrous texture.

5. The method according to claim 4, wherein the weft yarns (Tc3) present in said at least one lateral section of variable thickness (P3) have a count or a size equal to 12K while the weft yarns (Tc1) of the plurality of layers of weft yarns present in the remainder of the fibrous texture have a count or a size of 24K.

6. A gas turbine fan casing (810) made of composite material with a fibrous reinforcement comprising a plurality of superimposed turns of a strip-shaped fibrous texture (100) having a three-dimensional weaving between a plurality of layers of warp yarns (20) and a plurality of layers of weft yarns (30), said fibrous reinforcement being densified by a matrix,
**characterized in that** the fibrous texture (100) includes at least one lateral section of variable thickness (P2; P3) in which the weft yarns (Tc2; Tc3) have a size or a count different from the size or the count of the weft yarns (Tc1) of the plurality of layers of weft yarns present in the remainder of the fibrous texture, said at least one lateral section of variable thickness extending over the entire width (I₁₀₀) of the fibrous texture along an axial direction (DA) of the casing.

7. The casing according to claim 6, wherein the fibrous texture (100) includes at least one lateral section of variable thickness (P2) in which the weft yarns (Tc2) have a size or a count greater than the size or the count of the weft yarns (Tc1) of the plurality of layers of weft yarns present in the remainder of the fibrous texture.

8. The casing according to claim 7, wherein the weft yarns (Tc2) present in said at least one lateral section of variable thickness (P2) have a count or a size equal to 36K while the weft yarns (Tc1) of the plurality of layers of weft yarns present in the remainder of the fibrous texture have a count or a size of 24K.

9. The casing according to any one of claims 6 to 8, wherein the fibrous texture (100) includes at least one lateral section of variable thickness (P3) in which the weft yarns (Tc3) have a size or a count smaller than the size or the count of the weft yarns (Tc1) of the plurality of layers of weft yarns present in the remainder of the fibrous texture.

10. The casing according to claim 9, wherein the weft yarns (Tc3) present in said at least one lateral section of variable thickness (P3) have a count or a size equal to 12K while the weft yarns (Tc1) of the plurality of layers of weft yarns present in the remainder of the fibrous texture have a count or a size of 24K.

11. An aeronautical gas turbine engine having a fan casing (100) according to any one of claims 6 to 10.
